# EUROPEAN PATENT APPLICATION

(11) **EP 4 730 147 A1**
(43) Date of publication of application: **22.04.2026**
(21) Application number: 25186349.4
(22) Date of filing: 30.06.2025
(51) Int. Cl.: G06F 16/11

(54) **METHOD, APPARATUS, DEVICE AND MEDIUM FOR GENERATING A CONTROL POLICY IN AN INFORMATION SYSTEM**

(30) Priority: 16.10.2024 CN 202411448510
(71) Applicant: Beijing Volcano Engine Technology Co., Ltd., Beijing 100190 (CN)
(72) Inventor: CHEN, Jiaqi, Beijing, 100028 (CN); WU, Boze, Beijing, 100028 (CN)
(74) Representative: Isarpatent

(57) **Abstract**

A method, an apparatus, a device and a storage medium for generating a control policy in an information system are provided. The method comprises: receiving first information input by a user in a natural language, the first information indicating a target rule for managing the information system; determining, using a first machine learning model, a first control policy generation module matching the first information from a plurality of control policy generation modules; presenting target configuration information generated for a target control policy, the target configuration information being generated using the first control policy generation module, and the target control policy indicating a control policy for implementing the target rule in the information system; and adding, based on the target configuration information, the target control policy corresponding to the target rule in the information system in response to receiving a positive indication for the target configuration information.

## Description

### FIELD

Example embodiments of the present disclosure generally relate to the field of computers, and in particular, to a method, an apparatus, a device, and a computer-readable storage medium for generating a control policy in an information system.

### BACKGROUND

With the development of information technology (IT), the development of various industries is increasingly relying on information systems. Accordingly, the need for a management platform for an information system is also increasing. For example, information technology operation and data security management for an enterprise may utilize various IT tools of the enterprise to convert the management regulation of the enterprise into actual IT capability and service support, including management policy formulation, operation and maintenance data analysis, and the like. However, in increasingly complex network environments, efficient IT operation and maintenance face many challenges. Therefore, an effective policy generation method is expected to implement management for the information system.

### SUMMARY

In a first aspect of the present disclosure, there is provided a method of generating a control policy in an information system. The method includes: receiving first information input by a user in a natural language, the first information indicating a target rule for managing the information system; determining, using a first machine learning model, a first control policy generation module matching the first information from a plurality of control policy generation modules, the plurality of control policy generation modules being configured to generate configuration information for different types of control policies, respectively; presenting target configuration information generated for a target control policy, the target configuration information being generated using the first control policy generation module, and the target control policy indicating a control policy for implementing the target rule in the information system; and adding, based on the target configuration information, the target control policy corresponding to the target rule in the information system in response to receiving a positive indication for the target configuration information.

In a second aspect of the present disclosure, an apparatus for generating a control policy in an information system is provided. The apparatus includes a first information receiving module, configured to receive first information input by a user in a natural language, the first information indicating a target rule for managing the information system; a control policy generation module determination module is configured to determine, using a first machine learning model, a first control policy generation module matching the first information from a plurality of control policy generation modules, the plurality of control policy generation modules being configured to generate configuration information of different types of control policies, respectively; a configuration information presentation module, configured to present target configuration information generated for a target control policy, the target configuration information being generated using the first control policy generation module, and the target control policy indicating a control policy for implementing the target rule in the information system; and a control policy addition module, configured to add, based on the target configuration information, the target control policy corresponding to the target rule in the information system in response to receiving a positive indication for the target configuration information.

In a third aspect of the present disclosure, there is provided an electronic device. The device includes at least one processor; and at least one memory coupled to the at least one processor and storing instructions executable by the at least one processor. The instructions, when executed by the at least one processor, cause the device to perform the method of the first aspect.

In a fourth aspect of the present disclosure, there is provided a computer readable storage medium having stored thereon a computer program executable by a processor to implement the method of the first aspect.

It should be understood that the content described in the SUMMARY section is neither intended to limit key features or important features of embodiments of the present disclosure, nor is it intended to limit the scope of the present disclosure. Other features of the present disclosure will be readily understood from the following description.

### BRIEF DESCRIPTION OF DRAWINGS

The above and other features, advantages and aspects of embodiments of the present disclosure will become more apparent with reference to the following DETAILED DESCRIPTION taken in conjunction with the accompanying drawings. In the drawings, the same or similar reference numerals represent the same or similar elements, where:
FIG. 1 illustrates a schematic diagram of an example environment in which embodiments of the present disclosure can be implemented;
FIG. 2 illustrates a flowchart of an example process for generating a control policy in an information system according to some embodiments of the present disclosure;
FIG. 3 illustrates a schematic diagram of an example architecture for generating a control policy in an information system according to some embodiments of the present disclosure;
FIG. 4 illustrates a flowchart of a process of generating a control policy in an information system according to some embodiments of the present disclosure;
FIG. 5 illustrates a block diagram of an apparatus for generating a control policy in an information system according to some embodiments of the present disclosure; and
FIG. 6 illustrates a block diagram of a device capable of implementing a plurality of embodiments of the present disclosure.

### DETAILED DESCRIPTION

It can be understood that, before using the technical solutions disclosed in the embodiments of the present disclosure, the user should be notified of the type, the use range, the use scenario, and the like of the personal information involved in the present disclosure and authorized by the user in an appropriate manner according to related laws and regulations.

For example, when an active request of a user is received, prompt information is sent to the user to explicitly prompt the user, and an operation requested to be performed by the user needs to obtain and use personal information of the user. Therefore, the user can autonomously select, according to the prompt information, whether to provide personal information to software or hardware such as an electronic device, an application, a server or a storage medium that performs the operations of the technical solutions of the present disclosure.

As an optional but non-limiting implementation manner, in response to receiving an active request of the user, a manner of sending prompt information to the user, for example, a manner of popping up a window, the pop-up window may present the prompt information in a text manner. In addition, the pop-up window may further carry a selection control for the user to select "agree" or "disagree" to provide personal information to the electronic device.

It should be understood that the foregoing process of notifying and acquiring user authorization is merely illustrative and does not constitute a limitation on the implementations of the present disclosure, and other manners that meet related laws and regulations may also be applied to the implementations of the present disclosure.

It can be understood that data (including but not limited to the data itself, the acquisition or use of the data) involved in this technical solution should comply with requirements of corresponding laws and regulations and related rules.

The embodiments of the present disclosure will be described in more detail below with reference to the accompanying drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the drawings and embodiments of the present disclosure are only for illustrative purposes and are not intended to limit the scope of protection of the present disclosure.

It should be noted that titles of any section/subsection provided herein are not limiting. Various embodiments are described throughout this document, and any type of embodiment may be included under any section/subsection. Moreover, the embodiments described in any section/subsection may be combined in any manner with any other embodiments described in the same section/subsection and/or different section/subsection.

Herein, unless explicitly stated, "in response to A" performs one step and does not imply that this step is performed immediately after "A", but may include one or more intermediate steps.

In the description of the embodiments of the present disclosure, the term "include" and similar terms should be understood as open inclusion, that is, "include but not limited to". The term "based on" should be understood as "at least partially based on". The term "an embodiment" or "the embodiment" should be understood as "at least one embodiment". The term "some embodiments" should be understood as "at least some embodiments". Other explicit and implicit definitions may also be included below. The terms first", "second", etc. may refer to different or the same objects. Other explicit and implicit definitions may also be included below.

As used herein, the term "model" may learn associations between respective inputs and outputs from training data such that corresponding outputs may be generated for a given input after training is complete. The generation of the model may be based on machine learning techniques. Deep learning is a machine learning algorithm that processes inputs and provides corresponding outputs using a multi-layer processing unit. "Model" may also be referred to herein as a "machine learning model," "machine learning network," or "network," which terms are used interchangeably herein. A model may further include different types of processing units or networks.

As mentioned briefly above, in increasingly complex network environments, efficient IT operation and maintenance faces many challenges. For example, there is a need to deeply understand the overall IT architecture of an enterprise, including not only the technical level, but also the knowledge of the aspects of service processes, organizational structures, and the like. Accordingly, high-quality IT operation and maintenance relies on highly skilled personnel, requiring compound talents who understand both technology and service. Further, the IT environment is dynamically changed, needs to continuously optimize and adjust operation and maintenance policies, which requires operation and maintenance personnel to have sharp insights and fast response capabilities.

Therefore, the embodiments of the present disclosure provide a solution for generating a control policy in an information system. According to various embodiments of the present disclosure, first information input by a user in a natural language is received. The first information indicates a target rule for managing the information system. Using a first machine learning model, a first control policy generation module matching the first information is determined from a plurality of control policy generation modules. The plurality of control policy generation modules is configured to generate configuration information for different types of control policies, respectively. Target configuration information generated for a target control policy is presented. The target configuration information is generated using the first control policy generation module, and the target control policy indicates a control policy for implementing the target rule in the information system. Then, based on the target configuration information, the target control policy corresponding to the target rule is added in the information system in response to receiving a positive indication for the target configuration information.

In the embodiments of the present disclosure, a control policy that a user wants to add in natural language is supported, and the control policy of such natural language expression is converted into an executable policy in an information system by using a machine learning technology. By utilizing the embodiments of the present disclosure, even if the user does not have a deep understanding of the information system, a control policy may be added. In addition, the user may quickly and conveniently add the policy in a natural language mode. Therefore, the improvement and optimization of the policy may be automatically completed, so that the operation and maintenance efficiency of the information system is improved, and the operation and maintenance cost is reduced.

### Example Environment

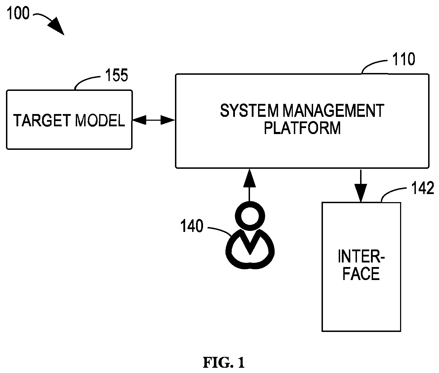

FIG. 1 illustrates a schematic diagram of an example environment 100 in which embodiments of the present disclosure can be implemented. As shown in FIG. 1, the environment 100 may include a system management platform 110. In this example environment 100, the system management platform 110 may be used to manage information systems of organizations (enterprises, government agencies, other organizations, etc.). Such an information system may include a collection of various hardware, software, networks, data resources, and the like. For example, the information system may include various hardware devices within the organization. The interface between different components in the information system and the external interface of the information system also belong to a part of the information system.

In response to receiving the information input by the user 140 in a natural language for generating a control policy, a target model 155 may be invoked to determine the control policy generation module, and then the control policy is added to the information system. In this context, a "module" described with reference to FIGS. 1 to 4 is configured to perform one or more tasks or implement one or more functions. For example, such a module may be encapsulated with functional modules that provide external input and output interfaces. Such modules may also be referred to herein as plug-ins.

In some examples, the system management platform 110 may further determine the control policy by invoking the control policy generation module. The system management platform 110 then adds the control policy to the information system by invoking the control add policy module. In some cases, the user 140 may be a user, such as an IT administrator of an enterprise that manages control policies using a terminal device.

In some embodiments, implementation of at least partial functionality of the system management platform 110 may be implemented based on the target model 155. In the process of adding a control policy to the information system, the system management platform 110 may invoke one or more target models 155, for example, a capability of the target model 155. As used herein, the term "model" may learn an association relationship between respective inputs and outputs from training data such that a corresponding output may be generated for a given input after training is complete. The generation of the model may be based on machine learning techniques. Deep learning is a machine learning algorithm that processes inputs and provides corresponding outputs using a multi-layer processing unit. The neural network model is one example of a deep learning-based model. As used herein, a "model" may also be referred to as a "machine learning model," a "learning model," a "machine learning network," or a "learning network," which terms are used interchangeably herein.

The system management platform 110 may be deployed locally on the terminal device of the user 140 and / or may be supported by the server device. For example, the terminal device of the user 140 may run a client of the system management platform, and the client may support interaction between the user and the system management platform provided by the server. When the system management platform runs locally on the terminal device of the user, the user 140 may directly interact with the local system management platform using the terminal device. When the system management platform runs on the server device, the server device may implement service provisioning of the client running in the terminal device based on the communication connection with the terminal device. The system management platform 110 may present a respective interface 142 to the user 140 based on the operation of the user 140 to output to and / or receive information related to the system management from the user 140.

The system management platform 110 may run on a suitable electronic device. The electronic device herein may be any type of device having computing capability, including a terminal device or a server device. The terminal device may be any type of mobile terminal, fixed terminal, or portable terminal, including a mobile handset, a desktop computer, a laptop computer, a notebook computer, a netbook computer, a tablet computer, a media computer, a multimedia tablet, a personal communication system (PCS) device, a personal navigation device, a personal digital assistant (PDA), an audio / video player, a digital camera / camcorder, a positioning device, a television receiver, a radio broadcast receiver, an e-book device, a gaming device, or any combination of the foregoing, including accessories and peripherals of these devices, or any combination thereof. The server device may include, for example, a computing system / server, such as a mainframe, an edge computing node, a computing device in a cloud environment, or the like. In some embodiments, the data management platform 110 may be implemented based on cloud services.

It should be understood that the structure and function of the environment 100 is described for example purposes only and does not imply any limitation to the scope of the present disclosure.

Some example embodiments of the present disclosure will be described below with continued reference to the accompanying drawings. In the following, example embodiments will be described primarily with respect to the system management platform 110. It should be understood that the actions described with respect to the system management platform 110 may be performed by the control policy generation module and the control policy addition module on the system management platform 110, or may be performed by the control policy generation module and the control policy addition module in conjunction with their server (e.g., server 130) and / or the machine learning model.

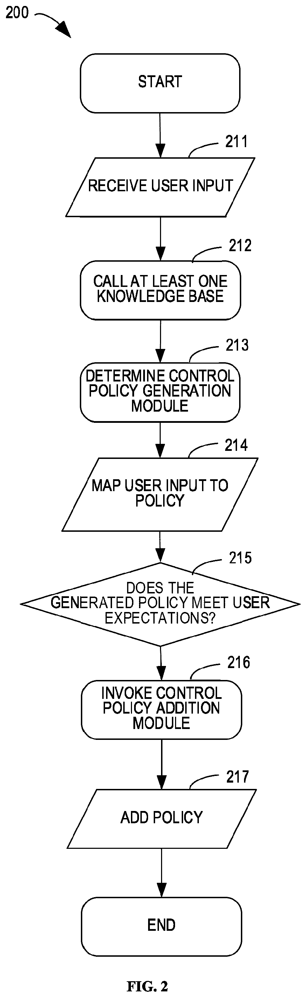

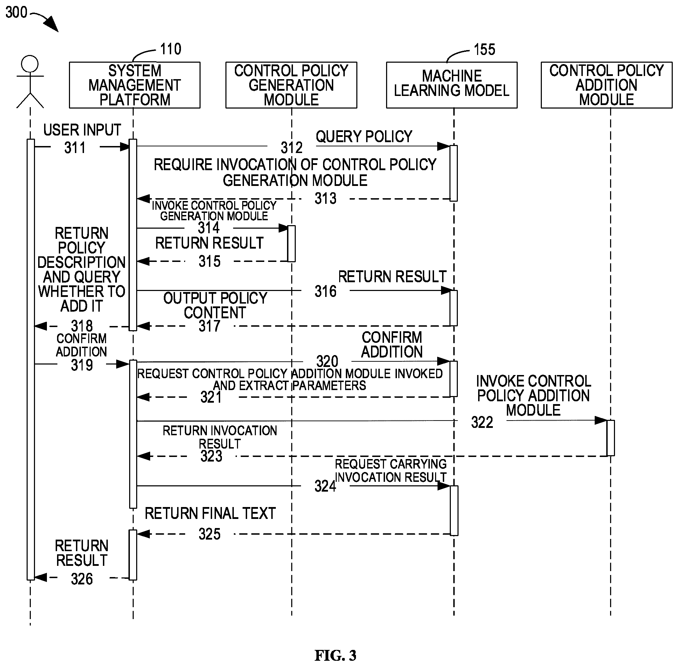

The solution for policy generation of the present disclosure will be described below with reference to FIG. 2 and FIG. 3. FIG. 2 illustrates a flowchart of an example process 200 for a control policy generation module and a control policy addition module according to some embodiments of the present disclosure. FIG. 3 illustrates a schematic diagram of an example architecture 300 for a control policy generation module and a control policy addition module according to some embodiments of the present disclosure.

At block 211, the system management platform 110 receives first information input by a user in a natural language. The first information indicates a target rule for managing an information system, for example, a rule input by a user (also referred to as an administrator) for managing an information technology system (IT system). In some examples, the system management platform 110 receives the natural language input by the user. For instance, it can be the natural language corresponding to the specific enterprise security management regulation and IT management regulation that the user needs to implement, or the problem scenarios that the enterprise IT administrator expects to solve, and so on.

In some embodiments, the system management platform 110 determines, using a first machine learning model, a first control policy generation module matching the first information from a plurality of control policy generation modules. In some embodiments, the plurality of control policy generation modules is respectively configured to generate configuration information of different types of control policies. It may be understood that the system management platform 110 determines the intention of the user using the first machine learning model, and determines the first control policy generation module (which may also be referred to as a policy generation plug-in) from a plurality of pre-configured control policy generation modules configured to generate different types of control policies based on the intention of the user. For example, if the system management platform 110 determines, using the first machine learning model, that the intent class of the administrator is "resolved by the IT system platform policy item that may implement the configuration information", the first machine learning model may invoke a policy generation plug-in that matches the intent class of the current administrator.

In some examples, the administrator may predetermine each type of policy to correspond to one control policy generation module. For example, if a security policy needs to be generated, the system management platform 110 may invoke a security control policy generation module. If a policy for network access needs to be generated, the system management platform 110 may invoke a network access control policy generation module. In some examples, the plugin may constrain how the model translates the regulation to what configuration information.

In some embodiments, the system management platform 110 may further determine the first control policy generation module matching the first information from the plurality of control policy generation modules in the following manner. As shown in FIG. 2, in the process 200, at block 212, the system management platform 110 obtains, based on the first information, a retrieval result matching the first information by retrieving at least one knowledge base related to the management of the information system. At block 213, the system management platform 110 determines, using the first machine learning model and based on the retrieval result, the first control policy generation module from the plurality of control policy generation modules.

In some embodiments, the at least one knowledge base may include a knowledge base on a general technology related to the information system, such as an information technology knowledge base. Alternatively, or additionally, the at least one knowledge base may include a knowledge base on management of an organization to which the information system belongs, such as an enterprise management regulation knowledge base. Alternatively, or additionally, the at least one knowledge base may include a knowledge base on a historical management policy adopted by the information system, such as a historical policy knowledge base. Alternatively, or additionally, the at least one knowledge base may further include a knowledge base on a reference method for a policy configuration, such as a knowledge base of a policy configuration method.

As illustrated in the example architecture 300, the system management platform 110 receives (311) specific requirements input by a user for a policy that needs to be generated. The system management platform 110 sends (312), to the machine learning model, a request to query a target policy based on the first information input by the user. The machine learning model retrieves the relevant knowledge background based on the first information through the knowledge base containing the IT technology knowledge base, the enterprise management regulation knowledge base, the historical policy data and the policy configuration method, so as to determine the retrieval result, thereby improving the understanding degree of the IT background knowledge.

Subsequently, the machine learning model analyzes and summarizes the retrieval results to determine the first control policy generation module for generating a policy. The machine learning model would send (313) an invocation request to the system management platform 110 for the need to invoke the first control policy generation module. After receiving the invocation request, the system management platform 110 calls (314) the first control policy generation module. Correspondingly, the system management platform 110 receives (315) initial target configuration information for the target policy generated by the first control policy generation module.

Therefore, in the embodiments of the present disclosure, by analyzing the IT management regulation of the enterprise, the IT technology knowledge base, the historical system platform policy data knowledge base, the conditional logic based on the time, the event data and the processing measures, the enterprise IT management method for the terminal and the security and the like may be disassembled into the configuration parameters corresponding to the system platform. Accordingly, configuration parameters may be provided to an administrator for reference to reduce the understanding degree of knowledge of the enterprise administrator's IT technology background and historical enterprise solution implementation experience. In this way, the working efficiency of the enterprise administrator in the daily IT operation and maintenance process is improved.

The process of determining the target configuration information by the system management platform 110 is described below with reference to FIG. 2 and FIG. 3. It will be appreciated that the actions described with respect to the system management platform 110 may be performed by the control policy generation module.

Continuing with the process 200, at block 214, the system management platform 110 converts the first information into description information with a predetermined logic by invocation of a second machine learning model by the first control policy generation module. The system management platform 110 determines the target configuration information based on the description information and corresponding parameters of the information system. In some examples, the second machine learning model and the first machine learning model may be the same machine learning model, for example, a language model, which is not limited in the present disclosure. In some examples, the first control policy generation module may convert the first information input by the user into the description information of the predetermined logic using the second machine learning model, such as "when in time X, facing X data situation, performing X operation". Then, the system management platform 110 converts the description information into configuration information based on the system parameters supported by the information system.

In some embodiments, the predetermined logic may include a conditional logic, and the description information includes a first part corresponding to a condition of the conditional logic and a second part corresponding to an action of the conditional logic. For example, the first part corresponding to the condition of the conditional logic may be represented as "if...", and the second part corresponding to the action of the conditional logic may be represented as "then...".

In some embodiments, the system management platform 110 determines, using the first control policy generation module, prompt information for the second machine learning model, where the prompt information includes trigger condition information, and the trigger condition information indicates a plurality of trigger conditions for a control policy of a target type corresponding to the first control policy generation module. Then, the system management platform 110 generates, using the second machine learning model, the description information based on the prompt information and the first information. The first part indicates a target trigger condition of the plurality of trigger conditions. For example, for a rule related to office security, the second machine learning model may re-write and optimize the rule, so that the information expressed by the rule is more explicit. Generating prompt information will be described below with reference to Table 1, which is an example of prompt information.

**Table 1**

| |
|---|
| 1 # # Role |
| 2 You are an information security and IT engineer who is familiar with common phrases and abbreviations in the workplace and has a deep understanding and familiarity with office software, including identity and permission management, VPN connection, office network management, terminal security, and dynamic control. If you receive a rule regarding office security, your task is to rewrite and optimize the rule to make its message clearer. Then, from the following trigger configuration list |
| 3 ['Discover virus events', 'Connect VPN', 'Obtain VPN nodes', 'Access application', 'Connect wirelessly', 'Discover data leakage events', 'Login', 'Access Internal network', 'Access application API', 'Login successfully', 'Connect wired', 'Obtain network access credentials', 'Logout', 'Detect terminal risk', 'Trigger periodically', 'Select the optimal triggering configuration'. |
| 4 |
| 5 # # Skills |
| 6 # # Skill 1: Rewrite the expression form of rules |
| 7- Understand the information input by the user and rewrite the sentence expression in the form of "if..., then...". |
| 8 Example: If a device that does not belong to the company is connected to the network, the network permission will be downgraded. |
| 9 Rewrite result: If the device does not belong to the company, the network permission will be downgraded. |
| 10 |
| 11 # # Skill 2: Select Trigger Configuration |
| 12- Based on the rewritten rule description, select 3 trigger configurations that best match the rule. |
| 13- Then, based on the rule description, compare and analyze the three selected trigger configurations, and select the most suitable one as the final trigger configuration. For example, [A role can use VPN node 1, B role can use VPN node 2, C role can use all nodes] can be rewritten as "If employees are role A, role B, and role C, they can use VPN node 1, VPN node 2, and all nodes respectively". |
| 14 |
| 15 # # Constraint: |
| 16- The recommended trigger configuration can only be selected from multiple trigger conditions provided by the user. Please do not generate non-existent trigger configurations based on text. If the "risk change" is not reflected in the rules, do not select the relevant configuration options for "terminal risk change". |
| 17- The output result needs to first the rewritten rule description, then the selected three trigger configurations that best match the rule and the most suitable trigger configuration selected after comparison and analysis. |
| The specific format is |
| 18 ... |
| 19 Rewrite rules: |
| 20 { Your rewritten rules} |
| 21 |
| 22 Top 3 best matching trigger configuration: |
| 23 1. {Best Matching Configuration 1} |
| 24 2. {Best Matching Configuration 2} |
| 25 3. {Best Matching Configuration 3} |
| 26 |
| 27 Best Trigger Configuration: |
| 28 {Best Configuration} |
| 29 ... |
| 30- Please note that during the process of rule rewriting, do not simplify the intent and content of the original rules. All information should be retained, and the format should be rewritten in the form of "if..., then...". |

It may be understood that the system management platform 110 converts, using the second machine learning model via the first control policy generation module, the first information into description information having a logical relationship. In some embodiments, the second machine learning model may convert, based on the prompt information, the first information into description information having a logical relationship . In some embodiments, the prompt information includes trigger condition information, and the trigger condition information is used to indicate a plurality of trigger conditions of a target type control policy corresponding to the first control policy generation module. As shown in Table 1, line 3 in the prompt information shows an example of multiple trigger conditions. In some embodiments, the plurality of trigger conditions may be pre-configured by the user.

In some examples, the second machine learning model may select the target trigger condition from the plurality of trigger conditions based on the description information. For example, if the second machine learning model determines, for a piece of information input by a user, that the information corresponds to a rule about office security, a trigger condition matching the rule may be determined from a plurality of trigger conditions. In some embodiments, the second machine learning model may select, from the plurality of trigger conditions, at least one trigger condition matching the description information based on the description information. Then, the second machine learning model analyzes and compares the at least one trigger condition to determine the target trigger condition.

In some embodiments, the system management platform 110 obtains the retrieval result matching the first information by retrieving at least one knowledge base related to the management of the information system based on the first information. The system management platform 110 may then determine a plurality of trigger conditions from the retrieval results. In some examples, the first control policy generation module may use the second machine learning model to combine the knowledge base of the policy configuration method and convert the information input by the user into a logical relationship based on "when in time X, facing X data situation, and performing X operation".

In some embodiments, the prompt information may further include a description and an example of a conversion task for converting a natural language input into the description information. For example, as shown in Table 1, lines 5 to 9 in the prompt information show Skill 1 used by the machine learning model. That is, the machine learning model may understand the information input by the user and rewrite the expression form of the sentence into the form of "if..., then...".

In some embodiments, the prompt information may further include a selection rule for selecting a trigger condition from the plurality of trigger conditions. For example, as shown in Table 1, lines 11 to 13 in the prompt information show Skill 2 used by the machine learning model. That is, the machine learning model selects at least one trigger condition that matches the first information based on the rewritten rule description. Then, the machine learning model compares the selected at least one trigger condition in combination with the rule description and selects the most suitable trigger condition as the target trigger condition.

In some embodiments, the prompt information may further include a constraint of the conversion task. For example, as shown in Table 1, lines 15 to 17 in the prompt information show constraint information used to constrain the machine learning model. That is, the machine learning model is constrained to select the recommended trigger configuration only from multiple trigger conditions provided by the user, and it is not necessary to generate the trigger condition that does not exist based on the text.

In some embodiments, the prompt information includes action information, the action information indicates a plurality of control actions of the target type control policy, and the second part indicates a target management action of the plurality of management actions. In some examples, the prompt information may be a form of understanding the first information input by the user and rewriting the expression form of the sentence into "if..., then...". For example, for an example "if a device that does not belong to the company accesses a network, the network permission is degraded, the rewritten result may be "if the device does not belong to the company, the network permission is degraded". It may be understood that the generation process of the target management action may refer to the generation process of the target trigger condition, which is not described herein again.

In some embodiments, the system management platform 110 presents target configuration information generated for the target control policy. The target configuration information is generated using the first control policy generation module, and the target control policy indicates a control policy for implementing the target rule in the information system. In some examples, the system management platform 110 may present configuration information for the target control policy generated by the first control policy generation module. It may be understood that the system management platform 110 may implement the control policy of the target rule in the information system.

In some embodiments, if a positive indication for the target configuration information is received, the system management platform 110 adds the target control policy corresponding to the target rule based on the target configuration information. Continuing with the process 200, at block 215, after receiving the target configuration information output by the machine learning model, the system management platform 110 presents the target configuration information, and determines whether the target configuration information meets the expectations of the user. At block 216, the system management platform 110 invokes the policy addition plugin if the user's determination of the target management information is received. At block 217, the system management platform 110 invokes the policy addition plug-in to add the control policy corresponding to the target rule.

In some embodiments, the system management platform 110 may add the target control policy corresponding to the target rule in the information system in the following manner. If a positive indication from the user is received, the system management platform 110 extracts a configuration parameter from the target configuration information. The system management platform 110 converts the configuration parameter into an interface parameter of a target interface in the information system through a control policy addition module. Then, the system management platform 110 adds the interface parameter to the target interface through the control policy adding module as the target control policy.

In some examples, the system management platform 110 invokes the control policy addition module to add the target control policy if a positive indication is received. The control policy addition module (which may also be referred to as a control policy addition plug-in) may convert the configuration parameter in the target configuration information into the interface parameter (for example, a "post" request) of the target interface included in the information system, and then invoke the target interface in the information system. Then, the control policy addition module may add the target control policy to the information system based on the interface parameter of the target interface and return the addition result to the system management platform 110.

As shown in the example architecture 300 shown in FIG. 3, the system management platform 110 sends (316) the initial target configuration information for the target rule generated by the target rule generation block to the machine learning model. It may be understood that the first control policy generation module converts the initial target configuration information into description information having a logical relationship by using the machine learning model. Subsequently, the machine learning model sends (317) description information (i.e., policy content) having the logical relationship to the system management platform 110.

The system management platform 110 presents (318) the target configuration information corresponding to the description information having the logical relationship to the client device corresponding to the user. The system management platform 110, if receiving (319) an acknowledgement addition indication from the user client device, sends (320) the acknowledgement indication to the machine learning model. Subsequently, the system management platform 110 receives (321) a request for invoking the control policy addition module from the machine learning model and extracts the parameters. In some examples, the control policy addition module may be used to add the control policy to the information system.

The system management platform 110 invokes (322) a policy addition block based on the request and parameters for invoking the control policy addition module. Accordingly, the system management platform 110 receives (323) results returned from the control policy addition module. The system management platform 110 sends (324) the results returned by the control policy addition module to the machine learning model. The system management platform 110 receives (325) the text returned by the machine learning model and sends (326) the text to the client device corresponding to the user. The text indicates a result of adding the control policy to notify the user, for example, if the control policy is added successfully or not.

In summary, the combination of policy analysis conversion and control strategy generation module in the present disclosure may improve the response efficiency of the service. Further, with the construction of more control policy creation modules for different information systems and the accumulation of more knowledge bases on the historical control policy data, the system may achieve more intelligent and accurate management solutions for information systems.

### Example Processes

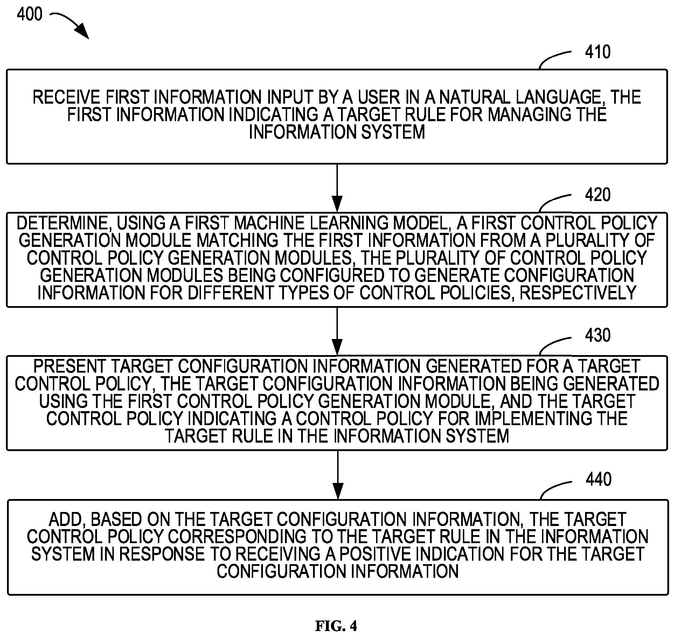

FIG. 4 illustrates a flowchart of a process 400 for generating a control policy in an information system according to some embodiments of the present disclosure. The process 400 may be implemented at the system management platform 110. The process 400 is described below with reference to FIG. 1.

At block 410, the system management platform 110 receives first information input by a user in a natural language, the first information indicating a target rule for managing the information system.

In block 420, the system management platform 110 determines, using a first machine learning model, a first control policy generation module matching the first information from a plurality of control policy generation modules, the plurality of control policy generation modules being configured to generate configuration information for different types of control policies, respectively.

In block 430, the system management platform 110 presents target configuration information generated for a target control policy, the target configuration information being generated using the first control policy generation module, and the target control policy indicating a control policy for implementing the target rule in the information system.

At block 440, the system management platform 110 adds, based on the target configuration information, the target control policy corresponding to the target rule in the information system in response to receiving a positive indication for the target configuration information.

In some embodiments, determining the first control policy generation module matching the first information from the plurality of control policy generation modules includes: obtaining, based on the first information, a retrieval result matching the first information by retrieving at least one knowledge base related to management of the information system; and determining, using the first machine learning model and based on the retrieval result, the first control policy generation module from the plurality of control policy generation modules.

In some embodiments, the at least one knowledge base includes at least one of: a knowledge base on a general technology related to the information system, a knowledge base on management of an organization to which the information system belongs, a knowledge base on a historical management policy adopted by the information system, or a knowledge base on a reference method for a policy configuration.

In some embodiments, the target configuration information is generated by: converting the first information into description information with a predetermined logic by invocation of a second machine learning model by the first control policy generation module; and determining the target configuration information based on the description information and respective parameters of the information system.

In some embodiments, the predetermined logic includes a conditional logic, the description information includes a first part corresponding to a condition of the conditional logic and a second part corresponding to an action of the conditional logic, and converting the first information into the description information with the predetermined logic includes: determining, using the first control policy generation module, prompt information for the second machine learning model, the prompt information including trigger condition information, and the trigger condition information indicating a plurality of trigger conditions for a control policy of a target type corresponding to the first control policy generation module; and generating, using the second machine learning model, the description information based on the prompt information and the first information, the first part indicating a target trigger condition of the plurality of trigger conditions.

In some embodiments, the prompt information further includes at least one of: a description and an example of a conversion task for converting a natural language input into the description information; a selection rule for selecting a trigger condition from the plurality of trigger conditions, or a constraint of the conversion task.

In some embodiments, the plurality of trigger conditions is determined by: obtaining, based on the first information, a retrieval result matching the first information by retrieving at least one knowledge base related to management of the information system; and determining the plurality of trigger conditions from the retrieval result.

In some embodiments, the prompt information includes action information indicating a plurality of control actions of the control policy of the target type, and the second part indicates a target management action of the plurality of management actions.

In some embodiments, adding, based on the target configuration information, the target control policy corresponding to the target rule in the information system includes: extracting a configuration parameter from the target configuration information in response to the positive indication; converting, by a control policy addition module, the configuration parameter into an interface parameter of a target interface in the information system; and adding, by the control policy addition module, the interface parameter to the target interface as the target control policy.

### Example Apparatus and Device

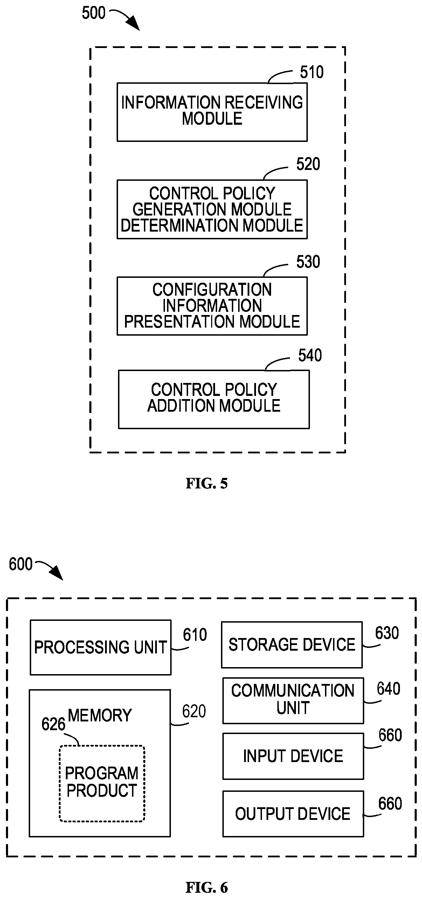

FIG. 5 is a schematic structural block diagram of an apparatus 500 for generating a control policy in an information system according to some embodiments of the present disclosure. The apparatus 500 may be implemented or included in the system management platform 110. The various modules / components in the apparatus 500 may be implemented by hardware, software, firmware, or any combination thereof.

As shown, the apparatus 500 includes an information receiving module 510 configured to receive first information input by a user in a natural language, the first information indicating a target rule for managing the information system. The apparatus 500 further includes a control policy generation module determination module 520, configured to determine, using a first machine learning model, a first control policy generation module matching the first information from a plurality of control policy generation modules, the plurality of control policy generation modules being configured to generate configuration information of different types of control policies, respectively. The apparatus 500 further includes a configuration information presentation module 530, configured to present target configuration information generated for a target control policy, the target configuration information being generated using the first control policy generation module, and the target control policy indicating a control policy for implementing the target rule in the information system. The apparatus 500 further includes a control policy addition module 540 configured to add, based on the target configuration information, the target control policy corresponding to the target rule in the information system in response to receiving a positive indication for the target configuration information.

In some embodiments, the control policy generation module determination module 520 is further configured to obtain, based on the first information, a retrieval result matching the first information by retrieving at least one knowledge base related to management of the information system; and determine, using the first machine learning model and based on the retrieval result, the first control policy generation module from the plurality of control policy generation modules.

In some embodiments, the at least one knowledge base includes at least one of: a knowledge base on a general technology related to the information system, a knowledge base on management of an organization to which the information system belongs, a knowledge base on a historical management policy adopted by the information system, or a knowledge base on a reference method for a policy configuration.

In some embodiments, the target configuration information is generated by: converting the first information into description information with a predetermined logic by invocation of a second machine learning model by the first control policy generation module; and determining the target configuration information based on the description information and respective parameters of the information system.

In some embodiments, the predetermined logic includes a conditional logic, the description information includes a first part corresponding to a condition of the conditional logic and a second part corresponding to an action of the conditional logic, and the apparatus 500 further includes a description information determination module configured to: determine, using the first control policy generation module, prompt information for the second machine learning model, the prompt information including trigger condition information, and the trigger condition information indicating a plurality of trigger conditions for a control policy of a target type corresponding to the first control policy generation module; and generate, using the second machine learning model, the description information based on the prompt information and the first information, the first part indicating a target trigger condition of the plurality of trigger conditions.

In some embodiments, the prompt information further includes at least one of: a description and an example of a conversion task for converting a natural language input into the description information; a selection rule for selecting a trigger condition from the plurality of trigger conditions, or a constraint of the conversion task.

In some embodiments, the plurality of trigger conditions is determined by: obtaining, based on the first information, a retrieval result matching the first information by retrieving at least one knowledge base related to management of the information system; and determining the plurality of trigger conditions from the retrieval result.

In some embodiments, the prompt information includes action information indicating a plurality of control actions of the control policy of the target type, and the second part indicates a target management action of the plurality of management actions.

In some embodiments, the control policy addition module 540 is further configured to extract a configuration parameter from the target configuration information in response to the positive indication; convert, by a control policy addition module, the configuration parameter into an interface parameter of a target interface in the information system; and add, by the control policy addition module, the interface parameter to the target interface as the target control policy.

FIG. 6 illustrates a block diagram of an electronic device 600 in which one or more embodiments of the present disclosure may be implemented. It should be understood that the electronic device 600 shown in FIG. 6 is only an example and should not constitute any limitation on the functionality and scope of the embodiments described herein. The electronic device 600 as shown in FIG. 6 may be used to implement the system management platform 110 in FIG. 1.

As shown in FIG. 6, the electronic device 600 is in the form of a general computing device. The components of electronic device 600 may include, but are not limited to, one or more processors or processing units 610, a memory 620, a storage device 630, one or more communication units 640, one or more input devices 650, and one or more output devices 660. The processing unit 610 may be an actual or virtual processor and may execute various processes based on the programs stored in the memory 620. In a multiprocessor system, multiple processing units execute computer executable instructions in parallel to improve the parallel processing capability of the electronic device 600.

The electronic device 600 typically includes multiple computer storage medium. Such medium may be any available medium that is accessible to the electronic device 600, including but not limited to volatile and non-volatile medium, removable and non-removable medium. The memory 620 may be volatile memory (for example, a register, cache, a random access memory (RAM)), a non-volatile memory (for example, a read-only memory (ROM), an electrically erasable programmable read-only memory (EEPROM), a flash memory), or any combination thereof. The storage device 630 may be any removable or non-removable medium, and may include a machine readable medium such as a flash drive, a disk, or any other medium, which may be used to store information and/or data and may be accessed within the electronic device 600.

The electronic device 600 may further include additional removable/non-removable, volatile/non-volatile storage medium. Although not shown in FIG. 6, a disk driver for reading from or writing to a removable, non-volatile disk (such as a "floppy disk"), and an optical disk driver for reading from or writing to a removable, non-volatile optical disk may be provided. In these cases, each driver may be connected to the bus (not shown) by one or more data medium interfaces. The memory 620 may include a computer program product 625, which has one or more program units configured to perform various methods or acts of various embodiments of the present disclosure.

The communication unit 640 communicates with a further electronic device through the communication medium. In addition, functions of components in the electronic device 600 may be implemented by a single computing cluster or multiple computing machines, which may communicate through a communication connection. Therefore, the electronic device 600 may be operated in a networking environment using a logical connection with one or more other servers, a network personal computer (PC), or another network node.

The input device 650 may be one or more input devices, such as a mouse, a keyboard, a trackball, etc. The output device 660 may be one or more output devices, such as a display, a speaker, a printer, etc. The electronic device 600 may also communicate with one or more external devices (not shown) through the communication unit 640 as required. The external device, such as a storage device, a display device, etc., communicate with one or more devices that enable users to interact with the electronic device 600, or communicate with any device (for example, a network card, a modem, etc.) that makes the electronic device 600 communicate with one or more other electronic devices. Such communication may be executed via an input/output (I/O) interface (not shown).

According to example implementation of the present disclosure, a computer readable storage medium is provided, on which computer executable instructions are stored, where the computer executable instructions are executed by the processor to implement the method described above. According to example implementation of the present disclosure, a computer program product is also provided. The computer program product is physically stored on a non-transient computer-readable medium and includes computer-executable instructions, which are executed by the processor to implement the method described above.

Various aspects of the present disclosure are described herein with reference to the flow chart and/or the block diagram of the method, the apparatus, the device and the computer program product implemented in accordance with the present disclosure. It would be appreciated that each block of the flowchart and/or the block diagram and the combination of each block in the flowchart and/or the block diagram may be implemented by computer-readable program instructions.

These computer-readable program instructions may be provided to the processing units of general-purpose computers, specialized computers or other programmable data processing devices to produce a machine that generates an apparatus to implement the functions/actions specified in one or more blocks in the flow chart and/or the block diagram when these instructions are executed through the computer or other programmable data processing apparatuses. These computer-readable program instructions may also be stored in a computer-readable storage medium. These instructions enable a computer, a programmable data processing apparatus and/or other devices to work in a specific way. Therefore, the computer-readable medium containing the instructions includes a product, which includes instructions to implement various aspects of the functions/actions specified in one or more blocks in the flowchart and/or the block diagram.

The computer-readable program instructions may be loaded onto a computer, other programmable data processing apparatus, or other devices, so that a series of operational steps may be performed on a computer, other programmable data processing apparatus, or other devices, to generate a computer-implemented process, such that the instructions which execute on a computer, other programmable data processing apparatuses, or other devices implement the functions/acts specified in one or more blocks in the flowchart and/or the block diagram.

The flowchart and the block diagram in the drawings show the possible architecture, functions and operations of the system, the method and the computer program product implemented in accordance with the present disclosure. In this regard, each block in the flowchart or the block diagram may represent a part of a unit, a program segment or instructions, which contains one or more executable instructions for implementing the specified logic function. In some alternative implementations, the functions labeled in the block may also occur in a different order from those labeled in the drawings. For example, two consecutive blocks may actually be executed in parallel, and sometimes may also be executed in a reverse order, depending on the function involved. It should also be noted that each block in the block diagram and/or the flowchart, and combinations of blocks in the block diagram and/or the flowchart, may be implemented by a dedicated hardware-based system that performs the specified functions or acts, or by the combination of dedicated hardware and computer instructions.

Each implementation of the present disclosure has been described above. The above description is an example, not exhaustive, and is not limited to the disclosed implementations. Without departing from the scope of the described implementations, many modifications and changes are obvious to ordinary skill in the art. The selection of terms used in the present disclosure aims to best explain the principles, practical application or improvement of technology in the market of each implementation, or to enable other ordinary skill in the art to understand the various embodiments disclosed herein.

## Claims

1. A method (400) of generating a control policy in an information system comprising:
receiving (410) first information input by a user in a natural language, the first information indicating a target rule for managing the information system;
determining (420), using a first machine learning model, a first control policy generation module matching the first information from a plurality of control policy generation modules, the plurality of control policy generation modules being configured to generate configuration information for different types of control policies, respectively;
presenting (430) target configuration information generated for a target control policy, the target configuration information being generated using the first control policy generation module, and the target control policy indicating a control policy for implementing the target rule in the information system; and
adding (440), based on the target configuration information, the target control policy corresponding to the target rule in the information system in response to receiving a positive indication for the target configuration information.

2. The method (400) of claim 1, wherein determining (420) the first control policy generation module matching the first information from the plurality of control policy generation modules comprises:
obtaining, based on the first information, a retrieval result matching the first information by retrieving at least one knowledge base related to management of the information system; and
determining, using the first machine learning model and based on the retrieval result, the first control policy generation module from the plurality of control policy generation modules.

3. The method (400) of claim 2, wherein the at least one knowledge base comprises at least one of:
a knowledge base on a general technology related to the information system,
a knowledge base on management of an organization to which the information system belongs,
a knowledge base on a historical management policy adopted by the information system, or
a knowledge base on a reference method for a policy configuration.

4. The method (400) of any of claims 1 to 3, wherein the target configuration information is generated by:
converting the first information into description information with a predetermined logic by invocation of a second machine learning model by the first control policy generation module; and
determining the target configuration information based on the description information and respective parameters of the information system.

5. The method (400) of claim 4, wherein the predetermined logic comprises a conditional logic, the description information comprises a first part corresponding to a condition of the conditional logic and a second part corresponding to an action of the conditional logic, and converting the first information into the description information with the predetermined logic comprises:
determining, using the first control policy generation module, prompt information for the second machine learning model, the prompt information comprising trigger condition information, and the trigger condition information indicating a plurality of trigger conditions for a control policy of a target type corresponding to the first control policy generation module; and
generating, using the second machine learning model, the description information based on the prompt information and the first information, the first part indicating a target trigger condition of the plurality of trigger conditions.

6. The method (400) of claim 5, wherein the prompt information further comprises at least one of:
a description and an example of a conversion task for converting a natural language input into the description information;
a selection rule for selecting a trigger condition from the plurality of trigger conditions, or
a constraint of the conversion task.

7. The method (400) of claim 5, wherein the plurality of trigger conditions is determined by:
obtaining, based on the first information, a retrieval result matching the first information by retrieving at least one knowledge base related to management of the information system; and
determining the plurality of trigger conditions from the retrieval result.

8. The method (400) of claim 5, wherein the prompt information comprises action information indicating a plurality of control actions of the control policy of the target type, and the second part indicates a target management action of the plurality of management actions.

9. The method (400) of any of claims 1 to 3, wherein adding (440), based on the target configuration information, the target control policy corresponding to the target rule in the information system comprises:
extracting a configuration parameter from the target configuration information in response to the positive indication;
converting, by a control policy addition module, the configuration parameter into an interface parameter of a target interface in the information system; and
adding, by the control policy addition module, the interface parameter to the target interface as the target control policy.

10. An apparatus (500) for policy generation comprising:
a first information receiving module (510), configured to receive first information input by a user in a natural language, the first information indicating a target rule for managing the information system;
a control policy generation module determination module (520), configured to determine, using a first machine learning model, a first control policy generation module matching the first information from a plurality of control policy generation modules, the plurality of control policy generation modules being configured to generate configuration information for different types of control policies, respectively;
a configuration information presentation module (530), configured to present target configuration information generated for a target control policy, the target configuration information being generated using the first control policy generation module, and the target control policy indicating a control policy for implementing the target rule in the information system; and
a control policy addition module (540), configured to add, based on the target configuration information, the target control policy corresponding to the target rule in the information system in response to receiving a positive indication for the target configuration information.

11. An electronic device (600) comprises:
at least one processor; and
at least one memory coupled to the at least one processor and storing instructions for execution by the at least one processor, the instructions, when executed by the at least one processor, causing the electronic device to perform the method (400) according to any of claims 1 to 9.

12. A computer readable storage medium having stored thereon a computer program executable by a processor to implement the method (400) according to any of claims 1 to 9.
